# EUROPÄISCHE PATENTANMELDUNG

(11) **EP 1 072 232 A2**
(43) Veröffentlichungstag der Anmeldung: **31.01.2001**
(21) Anmeldenummer: 00114060.7
(22) Anmeldetag: 06.07.2000
(51) Int. Cl.: A61C 9/00, B05C 17/01

(54) **Handgerät zum Ausbringen und insbesondere Mischen einer viskosen Flüssigkeit**

(30) Priorität: 27.07.1999 DE 19935292
(71) Anmelder: Zwingenberger, Arthur, 6006 Luzern (CH)
(72) Erfinder: Zwingenberger, Arthur, 6006 Luzern (CH)
(74) Vertreter: Borchert, Uwe Rudolf, Dipl.-Ing.

(57) **Zusammenfassung**

Die Erfindung betrifft ein Handgerät (10) zum Ausbringen und insbesondere Mischen einer viskosen Flüssigkeit mittels mindestens eines Kolbens, der in einem eine Handhabe (17) aufweisenden Gehäuse (16) gelagert ist und längs einer Achse (31) auf ein die viskose Flüssigkeit enthaltendes Behältnis einwirkt. Nach der Erfindung ist zumindest ein Leiter (48, 52) vorgesehen, der unabhängig von der viskosen Flüssigkeit ein Medium in den Behandlungsbereich überträgt.

## Beschreibung

Handgerät zum Ausbringen und insbesondere Mischen einer viskosen Flüssigkeit gemäß der im Oberbegriff des Anspruches 1 angegebenen Art.

Ein derartiges Handgerät ist aus der nicht vorveröffentlichten europäischen Patentanmeldung 0 909 590 bekannt und umfasst ein Gehäuse mit einer Handhabe. In dem Gehäuse ist ein Doppelkolben längs einer Achse verschiebbar gelagert, der auf zwei Folienbeutel einwirkt. Die Folienbeutel enthalten jeweils eine Komponente einer Zweikomponentenmischung, beispielsweise eine dentale Abformmasse. Mit Bewegen der Kolben auf die Folienbeutel werden die Komponenten in einen statischen Mischer gedrückt, dort vermischt und über eine Düse am freien Ende des statischen Mischers in den Behandlungsbereich ausgebracht.

Das Handgerät ist über eine Kupplung mit einem bekannten Dentalantrieb verbunden, wobei über die Kupplung eine triebschlüssige Verbindung zwischen Handgerät und Dentalantrieb hergestellt wird. Derartige Dentalantriebe werden in der Regel über einen Fußschalter gesteuert. Es ist bekannt, diese Kupplungen auch für Hand- und Winkelstücke mit Werkzeugen zu verwenden.

Zum Ausbringen von Abdruckformmassen in den Behandlungsbereich eines Patienten ist es notwendig, den Behandlungsbereich ausreichend auszuleuchten, trocken zu halten und/oder ggf. vorher zu säubern. Hierfür sind in der zahnärztlichen Dentaleinheit spezielle Einrichtungen vorgesehen, beispielsweise eine Dentalleuchte, eine Luftdruckpistole o. ä. Diese Konstruktion ist sehr aufwendig, in der Regel aber Bestandteil jeder Dentaleinheit. Des Weiteren sind für das Handgerät auf der einen Seite sowie beispielsweise für die Einrichtung zum Trocknen des Behandlungsbereiches mit der Luftdruckpistole oder zum Justieren der Dentalleuchte auf der anderen Seite mindestens zwei Hände für die Behandlung und Betätigung notwendig, was angesichts des eingeschränken Arbeitsbereiches im Mundraum sowie beim Patienten ungünstig ist.

Der Erfindung liegt die Aufgabe zugrunde, ein Handgerät zum Ausbringen einer viskosen Flüssigkeit gemäß der im Oberbegriff des Anspruches 1 angegebenen Art derart weiterzubilden, dass unter Vermeidung der genannten Nachteile ein einfaches Handling bei geringerem Aufwand ermöglicht wird.

Diese Aufgabe wird durch die kennzeichnenden Merkmale des Patentanspruches 1 in Verbindung mit seinen Oberbegriffsmerkmalen gelöst.

Vorteilhafte Weiterbildungen der Erfindung bilden die Gegenstände der Unteransprüche.

Der Erfindung liegt die Erkenntnis zugrunde, dass durch Integration zumindest eines weiteren Leiters in das Handgerät zusätzliche Medien, wie Luft, Licht o. ä., in den Behandlungsbereich unabhängig von der Betätigung des Kolbens auf einfache Weise übertragen werden können. Hierdurch wird nicht nur die Übertragung des zusätzlichen Mediums, sondern auch das zielgerichtete Ausbringen parallel zur viskosen Flüssigkeit ermöglicht.

Nach der Erfindung ist daher zumindest ein Leiter vorgesehen, der unabhängig von der viskosen Flüssigkeit ein Medium in den Behandlungsbereich überträgt. Hierbei kann beispielsweise das freie Ende des Leiters entsprechend der Ausbringöffnung für die viskose Flüssigkeit ausgerichtet sein.

Gemäß einer Ausführungsform der Erfindung ist der Leiter zumindest in seinem freien Endbereich zum Ausrichten auf den Behandlungsbereich flexibel ausgebildet. Ohne weiteres kann der Endbereich somit entsprechend den Anforderungen an ein zielgerichtetes Ausbringen ausgerichtet werden, wodurch die Behandlung optimiert wird.

Um eine hohe Flexibilität des Handgerätes zu erreichen, ist der Leiter mit einer Kupplung zum wahlweisen Anschluss an eine in Bezug auf das Handgerät externe Quelle des Mediums versehen.

Gemäß einer Ausführungsform der Erfindung ist zur Übertragung von Licht der Leiter als Lichtleiter ausgebildet. Hierdurch kann auf einfache Weise der Behandlungsbereich ausgeleuchtet werden.

Damit der Lichtstrahl in gewünschter Weise gebündelt und gestreut wird, ist der Lichtleiter an seinem freien Ende mit einer Optik versehen, wobei diese Optik zum einfachen Ausrichten drehbar im Lichtleiter gelagert ist.

Gemäß einer Ausführungsform ist der Lichtleiter aus Glas- oder Kunstofffaser ausgebildet.

Alternativ zu einem Lichtleiter oder ergänzend zu diesem Lichtleiter kann ein weiterer Leiter vorgesehen sein, beispielsweise ein Luftleiter mit Luft als zu übertragendes Medium.

Vorzugsweise weist dabei der Luftleiter an seinem freien Ende eine insbesondere abgewinkelte Düse auf, die zum einfachen Ausrichten insbesorndere drehbar im Leiter gelagert ist. Mit Drehen der Düse kann somit Luft optimal auf den Behandlungsbereich im Zusammenwirken mit der Ausbringöffnung des Handgerätes für die viskose Flüssigkeit ausgerichtet werden. Dadurch kann der Abeitsberich getrocknet und das Zahnfleisch vom Zahnhals teilweise fortgedrückt werden.

Hierduch wird gewährleistet, dass die Abdruckmasse auch tief eindringen kann und somit der Gebrauch von Retraktionskordeln vermieden wird.

Gemäß einer Ausführungsform der Erfindung ist das Handgerät mit einer Kanüle versehen, die endseitig eine Düse umfasst. Die Kanüle dient zum Ausbringen und Mischen der viskosen Flüssigkeit, beispielsweise mit Hilfe eines statischen Mischers. Diese Kanüle weist dabei eine Aufnahme zum lösbaren Befestigen des Leiters auf. In der Regel werden derartige Kanülen nach Gebrauch entfernt und weggeworfen. Insofern ist es günstig, dass der mit dem Handgerät fest verbundene Leiter mit der Kanüle lösbar verbunden ist. Alternativ hierzu kann der Leiter auch Teil der Kanüle sein, d. h. die Kanüle dient bereichsweise als Leiter.

Vorzugsweise ist der Leiter zumindest bereichsweise im Gehäuse fest angeordnet.

Zum einfachen Verbinden des Leiters mit der Kanüle umfasst die Aufnahme beispielsweise Klemmittel für den Leiter.

Gemäß einer Ausführungsform der Erfindung ist der Leiter zumindest bereichsweise innerhalb des Gehäuses des Handgerätes geführt, wodurch dieser vor mechanischer Einwirkung von außen geschützt ist.

Vorzugsweise handelt es sich bei der Kanüle um einen Teil einer aus dem Handgerät ausbringbaren Einwegbaueinheit, beispielsweise wie sie in der europäischen Patentanmeldung 98 119 286.7 (Veröffentlichungsnr. 0 910 995) offenbart ist.

Um einen wahlweisen Anschluss des Handgeräts an unterschiedliche externe Antriebseinheiten für die Kolben des Handgeräts zu ermöglichen, ist eine Kupplung vorgesehen, wobei insbesondere die Kupplung des Handgerätes sowie die Kupplung des Leiters identisch sind. Beispielsweise kann über die Kupplung das Handgerät an eine Dentaleinheit angeschlossen werden. Derartige Dentaleinheiten bieten für dentale Hand- und Winkelstücke nicht nur einen Rotationsantrieb (Dentalantrieb), sondern ebenfalls eine Quelle für Licht und Luft. Über eine einzige derartige Kupplung können somit mehrere Quellen mit dem Handgerät verbunden werden.

Bei der Kupplung handelt es sich vor allem um eine ISO-Kupplung für dentale Hand- und Winkelstücke.

Vorzugsweise wird das Handgerät im Dentalbereich verwendet, da hier der Bedarf an einfachen aber auch multifunktionalen Geräten, die einfach zu bedienen sind, sehr hoch ist.

Weitere Merkmale und Vorteile ergeben sich aus der folgenden Beschreibung zweier Ausführungsformen der Erfindung im Zusammenhang mit der Zeichnung. Es zeigen:
- Fig. 1: eine perspektivische Ansicht eines Handgerätes im Betriebszustand;
- Fig. 2: einen Längaschnitt durch das Handgerät von Fig. 1;
- Fig. 3: eine Frontansicht auf die Kanüle des Handgerätes von Fig. 1; und
- Fig. 4: eine Detailansicht des vorderen Endes der Kanüle gemäß einer zweiten Ausführungsform.

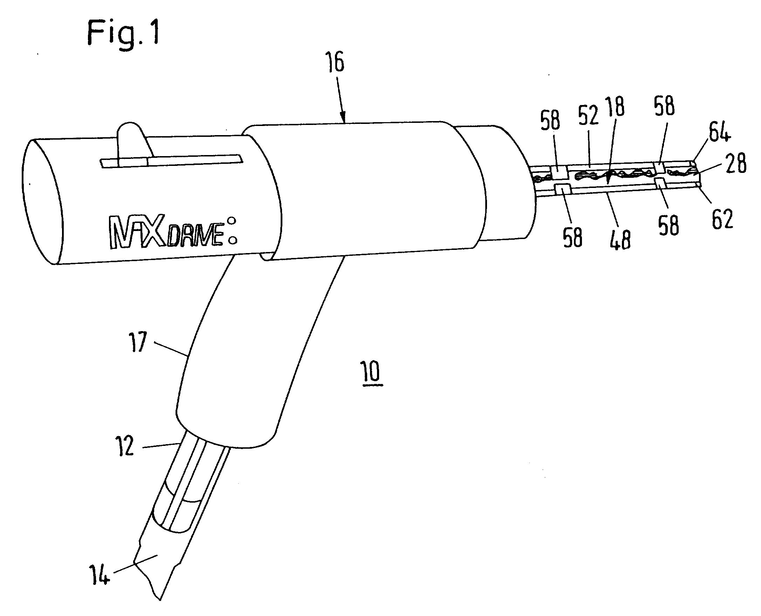

In Fig. 1 ist ein dentales Handgerät 10 nach der Erfindung dargestellt. Das Handgerät 10 ist an einem von dem Handgerät 10 über eine Kupplung 12 abkuppelbaren elektromotorischen Rotationsantrieb 14 als Teil einer Dentaleinheit angeschlossen, der mit einer hier nicht dargestellten Steuereinrichtung zusammenwirkt.

Das Handgerät 10 weist ein Gehäuse 16 auf, in das eine Einwegbaueinheit 18 eingebracht ist und das mit einer Handhabe 17 versehen ist.

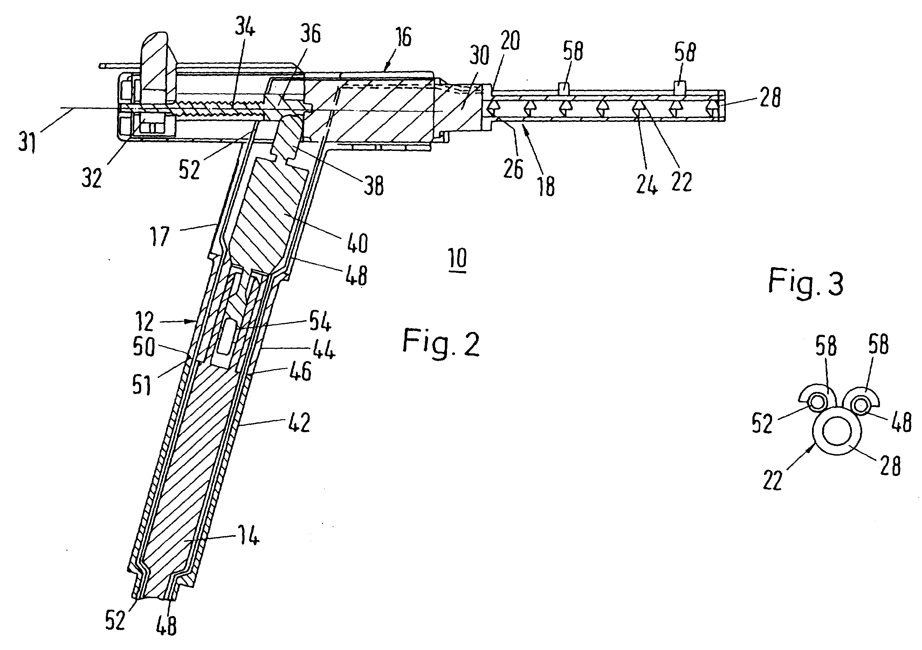

Die Einwegbaueinheit 18 besteht aus zwei hier nicht dargestellten Folienschläuchen, die Komponenten einer Mehrkomponenten-Formmasse, wie dentales Abdruckmaterial, enthalten, einem Kopfstück 20 sowie einem statischen Mischer 22, der in dem Kopfstück 20 fest integriert ist und aus diesem in Richtung der den Folienschläuchen entfernt gelegenen Seite stabförmig herausragt, siehe hierzu Fig. 2.

Das Kopfstück 20 umgreift die beiden Folienschläuche. Im einzelnen ist eine derartige Einwegbaueinheit 18 in der europäischen Patentanmeldung Nr. 98 119 286.7 offenbart.

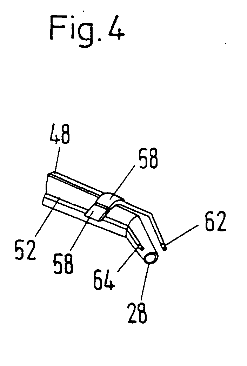

Die Außenhülle 24 des statischen Mischers 22 ist gegenüber der Basis 26 drehbar ausgebildet. Hierdurch kann insbesondere eine auf dem statischen Mischer 22 angeordnete Düse 28 - Fig. 4 - in entsprechende Bearbeitungspositionen ausgerichtet werden, wodurch beispielsweise beim Anwenden des Handgeräts 10 im Zusammenhang mit Abdruckmaterialien im dentalen Einsatz dessen Applikation im interproximalen sowie im lingualen oder buccalen Bereich erleichtert wird.

Die Folienschläuche, das Kopfstück 20 sowie der statische Mischer 22 bilden die unlösbar miteinander verbundene Einwegbaueinheit 18, die nach Gebrauch aus dem Handgerät 10 entfernt und weggeworfen wird.

Die Einwegbaueinheit 18 wird in eine Aufnahme eingebracht, die mittig durch eine Trennwand 30 begrenzt wird. Die Trennwand 30 ist zwischen den Folienbeuteln angeordnet. Auf die Folienbeutel wirken längs einer Achse 31 Kolben ein, die mit einer Mutter 32 verbunden sind. Die Mutter 32 wirkt mit einer Welle 34 zusammen. Mit Drehen der Welle 34 wird die Mutter 32 mit den Kolben auf die Folienschläuche zubewegt.

Die Welle 34 ist im Gehäuse 16 des Handgeräts 10 gelagert und an ihrem vorderen Ende mit einem Stirnrad 36 versehen.

In das Stirnrad 36 greift ein weiteres Stirnrad 38 ein. Das weitere Stirnrad 38 ist mit dem Rotationsantrieb 14 verbunden, dessen Drehachse zur Translationsachse 31 der beiden Kolben im Winkel angeordnet ist, siehe Fig. 2.

An das weitere Stirnrad 38 schließt sich ein Reduziergetriebe 40 an, das mit einer Untersetzung von 50 bis 1000 : 1 versehen ist.

Dem Reduziergetriebe 40 nachgeschaltet ist eine ISO-Kupplung, die der Kupplung 12 entspricht. Die Kupplung 12 besteht aus einem mit einem hier nicht dargestellten Dentalmotor einer Zahnarzteinheit verbundenen ersten Kupplungsteil 42 und einem mit dem Handgerät 10 verbundenen zweiten Kupplungsteil 44 als Gegenstück des ersten Kupplungsteils 42.

In dem ersten Kupplungsteil 42 ist ein Anschluss 46 eines aus Glasfaser bestehenden Lichtleiters 48 sowie ein weiterer Anschluss 50 mit Dichtungen 51 für einen Luftleiter 52. Zudem ist eine triebschlüssige Verbindung 54 vorgesehen, die das Reduziergetriebe mit einer Antriebswelle 56 des Dentalmotors verbindet.

Innerhalb des ersten Kupplungsteils 42 sowie des zweiten Kupplungsteils 44 im Handgerät ist sowohl der Lichtleiter 48 als auch der Luftleiter 52 bis oberhalb des Kopfstückes 20 der Einwegbaueinheit 18 geführt und darin fest angeordnet. Über die Kupplung 12 wird somit auch ein Anschluss des Lichtleiters 48 als auch des Luftleiters 52 an eine Quelle in der Dentaleinheit hergestellt.

Derartige ISO-Kupplungen mit Anschluss 46 für einen Lichtleiter und einen Anschluss 50 für einen Luftleiter sind im Zusammenhang mit Hand- und Winkelstücken bekannt. Auch dort werden zum Behandlungsbereich über den Werkzeugkopf Druckluft und/oder Licht über die entsprechenden Leiter geführt.

Gemäß den Fig. 1 und 2 sind der Lichtleiter 48 und der Luftleiter 52 oberhalb des statischen Mischers mittels Klemmittel 58 lösbar befestigt. Hierfür weisen der Lichtleiter 48 und der Luftleiter 52 eine ausreichende Flexibilität auf, um in die entsprechende Aufnahme 60 der Klemmittel 58 eingedrückt werden zu können, siehe Fig. 3.

Der Licht- und Luftleiter 48, 52 erstreckt sich im wesentlichen parallel zum statischen Mischer 22 bis zur Düse 28 des statischen Mischers 22. Der Lichtleiter 48 ist dort mit einer drehbaren im Lichtleiter 48 gelagerten Optik 62 versehen, die das Licht auf den Behandlungsbereich bündelt oder in diesen streut. Mit Drehen der Optik 62 kann das Licht auf den Behandlungsbereich ausgerichtet werden. Statt der Optik 62 umfasst der Luftleiter 52 eine drehbar im Luftleiter 52 gelagerte Düse 64.

In Fig. 4 ist eine alternative Ausführungsform der Erfindung dargestellt. Der statische Mischer 22 weist zum einen eine abgewinkelte Düse 28 auf. Zudem ist der Lichtleiter 48 als auch der Luftleiter 52 in seinem freien Endbereich flexibel ausgebildet und kann entsprechend auf den Behandlungsbereich ausgerichtet werden.

Selbstverständlich können auch die Aufnahmen 60 und die Klemmittel 58 anders ausgeformt sein, beispielsweise in Form von Längsrillen innerhalb der Außenhülle 24 des statischen Mischers 22.

Durch die Klemmittel 58 können der Lichtleiter 48 und der Luftleiter 52 einfach vom statischen Mischer 22 und somit von der Einwegbaueinheit 18 gelöst werden. Anschließend kann die Einwegbaueinheit 18 ausgewechselt werden und der Lichtleiter 48 und der Luftleiter 52 wieder in die Aufnahme 60 der Klemmittel 58 der neuen Einwegbaueinheit 18 eingebracht werden. Danach ist das Handgerät 10 mit Lichtleiter 48 und Luftleiter 52 wieder betriebsbereit.

Die Lichtquelle als auch die Luftquelle in der Dentaleinheit werden über eine Steuereinheit, beispielsweise in Form eines Fußschalters, gesteuert.

### Bezugszeichenliste

- 10: Handgerät
- 12: Kupplung
- 14: Rotationsantrieb
- 16: Gehäuse
- 17: Handhabe
- 18: Einwegbaueinheit
- 20: Kopfstück
- 22: statischer Mischer
- 24: Außenhülle
- 26: Basis
- 28: Düse des statischen Mischers
- 30: Trennwand
- 32: Mutter
- 34: Welle
- 36: Stirnrad
- 38: weiteres Stirnrad
- 40: Reduziergetriebe
- 42: erstes Kupplungsteil
- 44: zweites Kupplungsteil
- 46: Anschluss
- 48: Lichtleiter
- 50: Anschluss
- 51: Dichtung
- 52: Luftleiter
- 54: triebschlüssige Verbindung
- 56: Antriebswelle
- 58: Klemmittel
- 60: Aufnahme
- 62: Optik
- 64: Düse

## Patentansprüche

1. Handgerät (10) zum Ausbringen und insbesondere Mischen einer viskosen Flüssigkeit mittels mindestens eines Kolbens, der in einem eine Handhabe (17) aufweisenden Gehäuse (16) gelagert ist und längs einer Achse (31) auf ein die viskose Flüssigkeit enthaltendes Behältnis einwirkt, **gekennzeichnet durch** zumindest einen Leiter (48, 52), der unabhängig von der viskosen Flüssigkeit ein Medium in den Behandlungsbereich überträgt.

2. Handgerät nach Anspruch 1, **dadurch gekennzeichnet**, dass der Leiter (48, 52) zumindest in seinem freien Endbereich zum Ausrichten auf den Behandlungsbereich flexibel ausgebildet ist.

3. Handgerät nach Anspruch 1 oder 2, **dadurch gekennzeichnet**, dass der Leiter (48, 52) mit einer Kupplung (12) zum wahlweisen Anschluss an eine in Bezug auf das Handgerät (10) externe Quelle des Mediums versehen ist.

4. Handgerät nach einem der vorangehenden Ansprüche, **gekennzeichnet durch** einen Lichtleiter (48) als Leiter und Licht als zu übertragendes Medium.

5. Handgerät nach Anspruch 4, **dadurch gekennzeichnet**, dass der Lichtleiter (48) an seinem freien Ende eine Optik (62) aufweist, die den Lichtstrahl auf den Behandlungsbereich bündelt oder streut, und insbesondere dass diese Optik (62) drehbar im Lichtleiter (48) gelagert ist.

6. Handgerät nach Anspruch 4 oder 5, **gekennzeichnet durch** einen aus Glas- oder Kunststofffaser gebildeten Lichtleiter (48).

7. Handgerät nach einem der vorangehenden Ansprüche, **gekennzeichnet durch** einen Luftleiter (52) als Leiter und Luft als zu übertragendes Medium.

8. Handgerät nach Anspruch 7, **dadurch gekennzeichnet**, dass der Luftleiter (52) an seinem freien Ende eine abgewinkelte Düse (64) aufweist, die insbesondere drehbar im Leiter gelagert ist.

9. Handgerät nach einem vorangehenden Ansprüche mit einer Kanüle, die endseitig eine Düse (28) umfasst, zum Ausbringen und Mischen der viskosen Flüssigkeit, beispielsweise in Form eines statischen Mischers (22), **dadurch gekennzeichnet**, dass die Kanüle (22) eine Aufnahme (60) zum lösbaren Befestigen des Leiters (48, 52) aufweist.

10. Handgerät nach Anspruch 9, **dadurch gekennzeichnet**, dass die Aufnahme (60) Klemmittel (58) für den Leiter (48, 52) umfasst.

11. Handgerät nach einem der vorangehenden Ansprüche, **dadurch gekennzeichnet**, dass der Leiter (48, 52) zumindest im Gehäuse (16) bereichsweise fest angeordnet ist.

12. Handgerät nach einem der vorangehenden Ansprüche, **dadurch gekennzeichnet**, dass der Leiter (48, 52) zumindest bereichsweise innerhalb des Gehäuses (16) geführt ist.

13. Handgerät nach einem der Ansprüche 10 bis 12, **dadurch gekennzeichnet**, dass die Kanüle (22) Teil einer aus dem Handgerät (10) ausbringbaren Einwegbaueinheit (18) ist.

14. Handgerät nach einem der vorangehenden Ansprüche, **dadurch gekennzeichnet**, dass zwecks wahlweisem Anschluss des Handgeräts (10) an unterschiedliche externe Antriebseinrichtungen für die Kolben das Handgerät (10) mit einer Kupplung (12) versehen ist, wobei insbesondere diese Kupplung (12) und die Kupplung (12) des Leiters (48, 52) identisch sind.

15. Handgerät nach Anspruch 14, **dadurch gekennzeichnet**, dass die Kupplung (12) als eine ISO-Kupplung für dentale Hand- und Winkelstücke ausgebildet ist.

16. Handgerät nach einem der vorangehenden Ansprüche, **gekennzeichnet durch** eine Verwendung im Dentalbereich.
